(19) Europäisches Patentamt
European Patent Office
Office européen des brevets

(11) **EP 2 009 640 A2**

(12) **EUROPEAN PATENT APPLICATION**

(43) Date of publication:
**31.12.2008 Bulletin 2009/01**

(51) Int Cl.:
**G11B 27/034** (2006.01)  **G11B 27/10** (2006.01)
**G11B 27/30** (2006.01)  **G11B 27/32** (2006.01)
**G11B 27/34** (2006.01)

(21) Application number: **08165988.0**

(22) Date of filing: **13.10.2003**

(84) Designated Contracting States:
**AT BE BG CH CY CZ DE DK EE ES FI FR GB GR HU IE IT LI LU MC NL PT RO SE SI SK TR**

(30) Priority: **15.10.2002  KR 20020062882**
**07.03.2003  US 452551 P**

(62) Document number(s) of the earlier application(s) in accordance with Art. 76 EPC:
**03751522.8 / 1 552 521**

(71) Applicant: **SAMSUNG ELECTRONICS CO., LTD.**
**Suwon-city,**
**Kyungki-do 442-742 (KR)**

(72) Inventors:
• **Jung, Kil-Soo**
**Gyeonggi-do (KR)**
• **Moon, Seong-Jin**
**Suwon-si**
**Gyeonggi-do (KR)**

• **Ko, Jung-Wan**
**Suwon-si**
**Gyeonggi-do (KR)**
• **Heo, Jung-Kwon**
**Seoul (KR)**
• **Park, Sung-Wook**
**Seoul (KR)**
• **Chung, Hyun-Kwon**
**Seoul (KR)**

(74) Representative: **Robinson, Ian Michael**
**Appleyard Lees**
**15 Clare Road**
**Halifax, West Yorkshire HX1 2HY (GB)**

Remarks:
This application was filed on 07-10-2008 as a divisional application to the application mentioned under INID code 62.

(54) **Information storage medium with data structure for multi-angle and method therefor**

(57)    An information storage medium controls a multi-angle data reproducing apparatus by having a data structure including at least one clip for each angle, each angle clip being a data record unit of the multi-angle data for an angle. Each angle clip is divided into predetermined jumping units at jumping points and each is recorded in contiguous areas of the information storage medium. Using the clip jumping points as a link among the angle clips in which each angle clip is contiguously recorded provides efficient random access for reading the multi-angle data for angle change.

FIG. 15

**Description**

<u>Technical Field</u>

The present invention relates to an information storage medium with a structure for multi-angle data, and recording and reproducing apparatuses therefor.

<u>Background Art</u>

A digital versatile disc (DVD) is a representative example of conventional information storage media on which multi-angle data can be recorded. The multi-angle data is recorded on a DVD using an interleaving method in which data is divided into predetermined units and the units are alternately recorded.

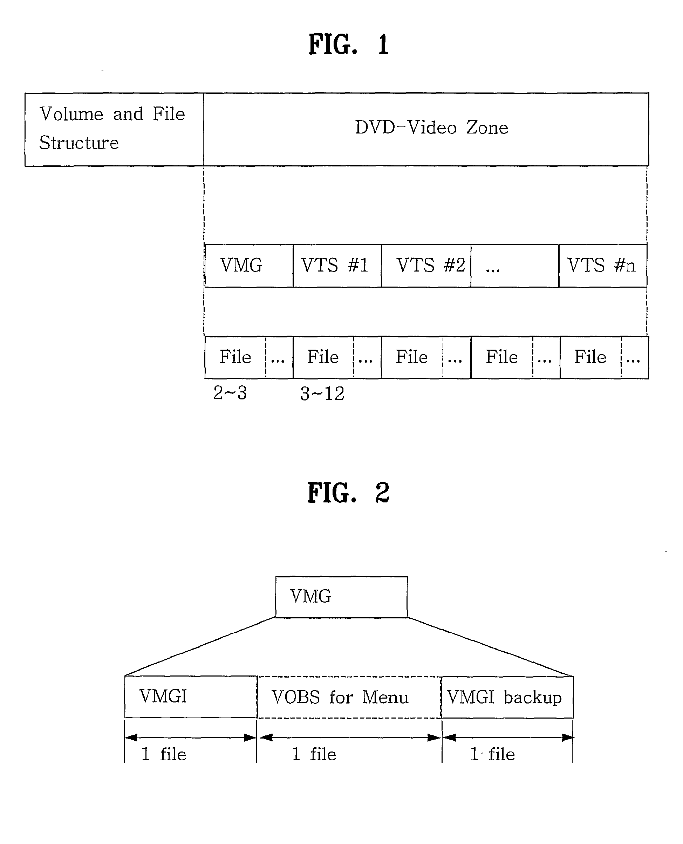

Hereinafter, a video (including audio as the case may be) data structure of a DVD, which is a conventional multimedia storage medium, will be described with the accompanying drawings. FIG. 1 is a diagram of a conventional data structure of a DVD. Referring to FIG. 1, a DVD is divided into a video manager (VMG) area and a plurality of video title set (VTS) areas. Information regarding video titles (i.e., video title related data) and menu information for the video titles are stored in the VMG area, and video title data is stored in the plurality of VTS areas. In general, the VMG area includes two or three files and each VTS area includes three to twelve files.

FIG. 2 is a diagram of a conventional data structure of the VMG area. Referring to FIG. 2, the VMG area includes a video manager information (VMGI) area containing additional information regarding the VMG area, a video object set (VOBS) area containing video object information regarding the video title menus, and a VMGI backup area. Each of the VMGI area, the VOBS area, and the VMGI backup area exists as a file. However, the inclusion of the VOBS area in the VMG area is optional, such that in some cases, the VOBS area may not be formed in the VMG area.

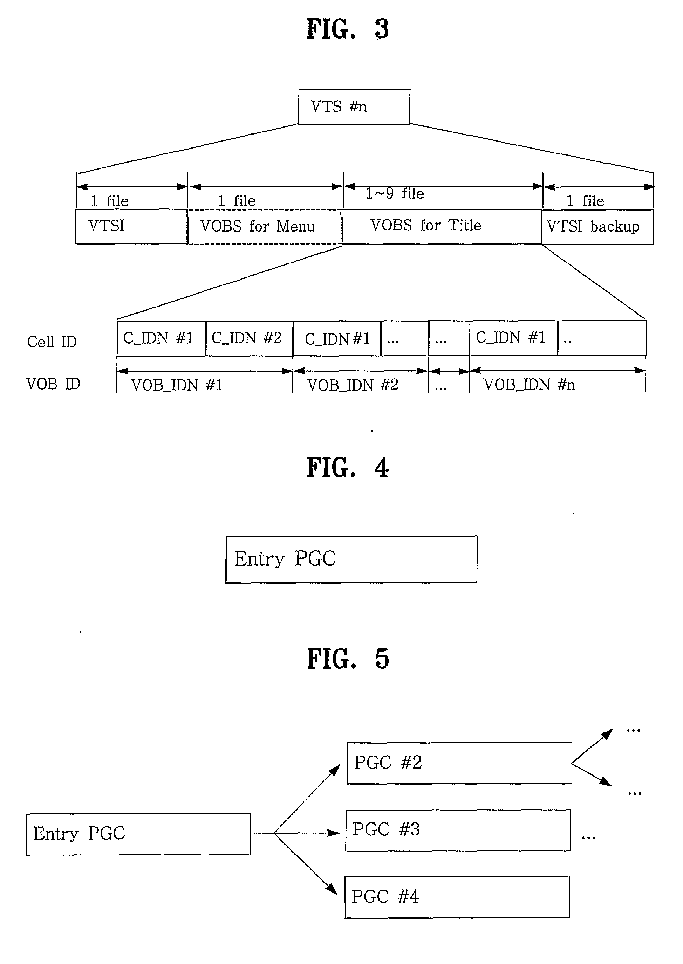

Each VTS area contains the title data, which is a unit of reproduction, and video object information VOBS. A plurality of titles may be recorded on a VTS area. FIG. 3 is a diagram of a conventional data structure of the VTS area. Referring to FIG. 3, video title set information (VTSI), VOBS for a video title menu screen, VOBS for a video title set, and VTSI backup data are recorded in the VTS area. Recording of the video title menu screen VOBS is optional for displaying a title menu screen. Each video title set VOBS is divided into a plurality of video objects VOBs a unit of a data record and each VOB comprises cells which are a smallest unit of a VOB (i.e., a data unit) of the title. Therefore, a VOB or a data record unit comprises a plurality of cells as the most basic unit of the data record unit.

In a DVD, units of reproduction are recorded in a hierarchical structure. A title (i.e., data records) is formed on the uppermost layer of the hierarchical structure. In general, a title (i.e., data records of the title) is linked to at least one program chain (PGC). The first reproduced PGC among a plurality of PGCs, is called an entry PGC. FIG. 4 is a diagram illustrating a title linked to a first PGC, i.e., an entry PGC, according to the conventional multi-angle data recording method. FIG. 5 is a diagram illustrating a title linked to a plurality of PGCs, according to the conventional multi-angle data recording method. When one of the plurality of PGCs is selected and reproduced after reproduction of a PGC as shown in FIG. 5, the command for determining the PGC to be selected and reproduced may be stored in a DVD. Controlling the sequence of reproduction is referred to as navigation. A command for determining the navigation is contained in a program chain information (PGCI).

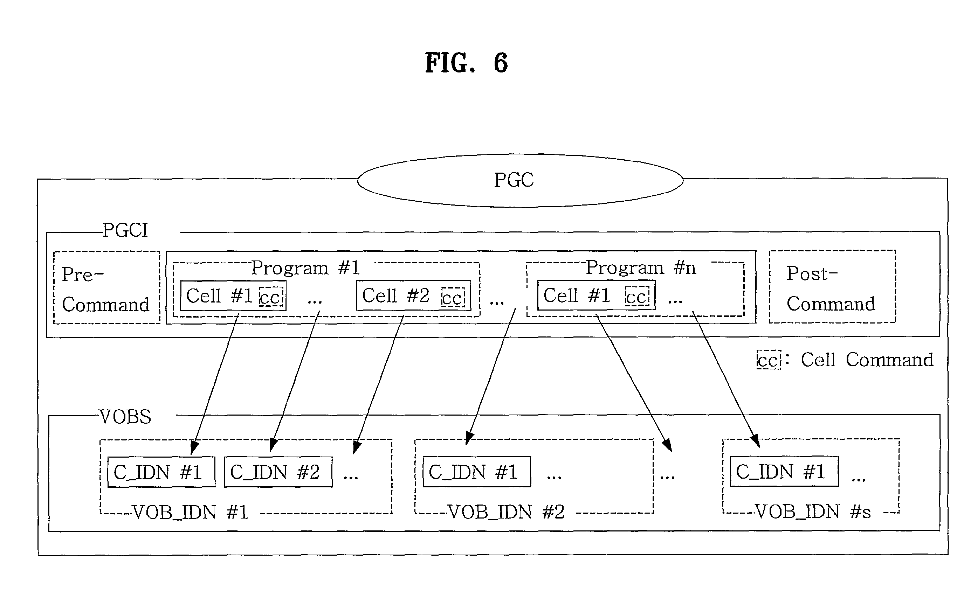

FIG. 6 is a diagram of a PGC as linked to the title data records, according the conventional multi-angle data recording and reproducing method. Referring to FIG. 6, the PGC comprises PGC information (PGCI) and the video title set VOBS comprising the title data records. The PGCI contains a pre-command that includes a navigation command, a post-command, and a plurality of program information. The pre-command is executed before reproduction of a PGC and the post-command is executed after reproduction. Each PGCI program contains a plurality of cell information, each program cell being a unit of reproduction. Cells included in a program (i.e., PGCI program cells) are linked to respective cells included in a VOB of a video title set VOBS, each VOB cell being a unit of a data record. Each program cell, i.e., a unit of reproduction, has a cell command (cc) provided after reproduction thereof. The PGCI is part of a hierarchical description of the PGC as a unit of reproduction, and the PGC has an information structure that links a PGCI program cell, which is the most basic unit of reproduction, to a VOB cell which is the most basic unit of a data record. In particular, the PGC is a link of a plurality of PGCI program cells, which are units of reproduction. Here, the plurality of PGCI program cells may form an angle block.

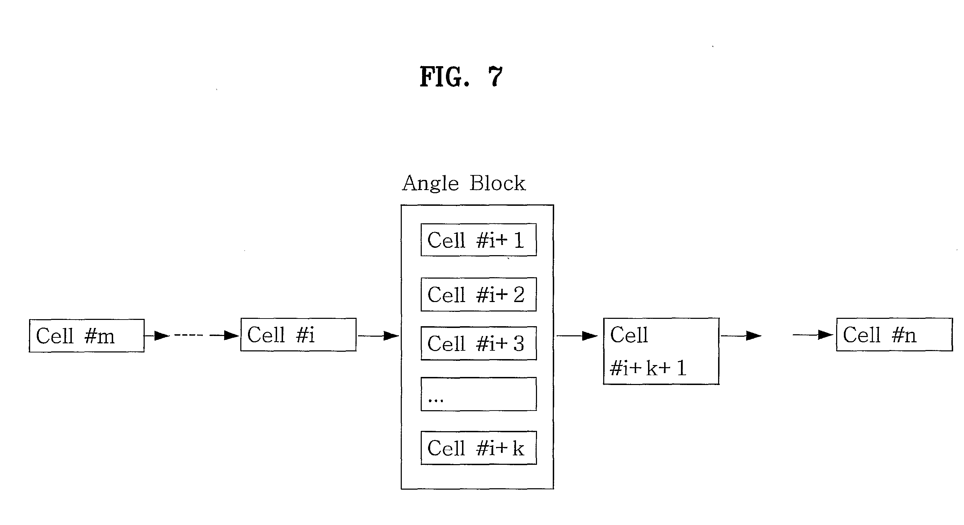

FIG. 7 is a diagram of a conventional data structure of an angle block. Referring to FIG. 7, the angle block is constructed such that a plurality of reproduction cells are arranged in parallel so that only one of these cells can be reproduced. The reproduction cells that form the angle block, have the same reproduction time. Each of the reproduction cells corresponds to a specific angle. If cells, which are units of reproduction, form an angle block, data for a specific angle is divided into predetermined interleaved units (ILVUs) and recorded on VOBs comprising cells, which are units of a data record, using the interleaving method.

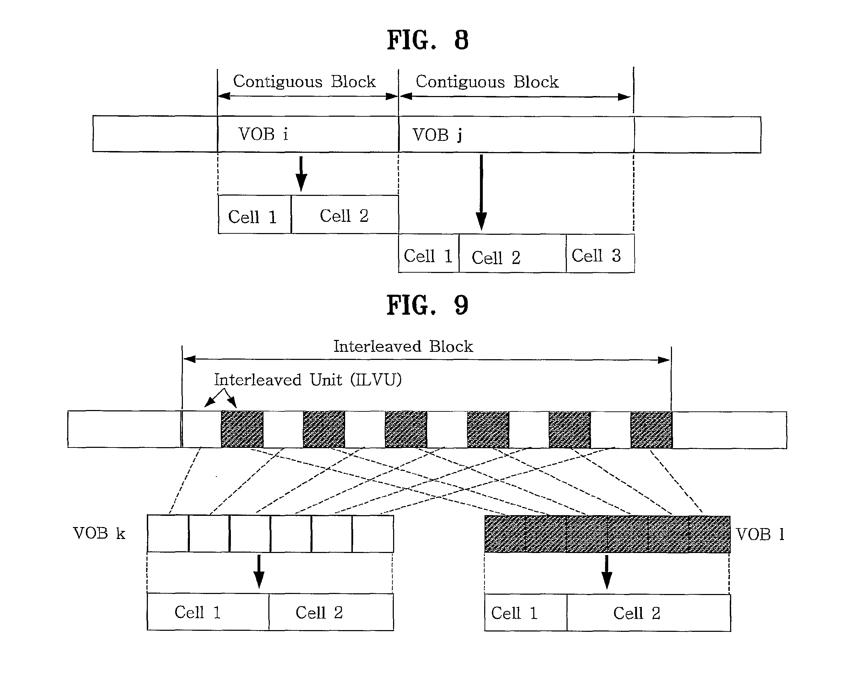

FIG. 8 is a diagram of a conventional data structure of video title set VOBs and cells in which multi-angle support is not applied.

Referring to FIG. 8, the VOBs are sequentially stored and recorded in contiguous blocks of an information storage medium, the contiguous block being a contiguous recording space. However, as shown in FIG. 9, when multi-angle support is applied, the VOBs for each angle and their cells are recorded in ILVUs on an interleaved block, using the interleaving method. As a result, data for a specific angle is not recorded on contiguous recording areas. That is, conventionally, angle data is recorded sequentially on alternate VOBs using the interleaving method.

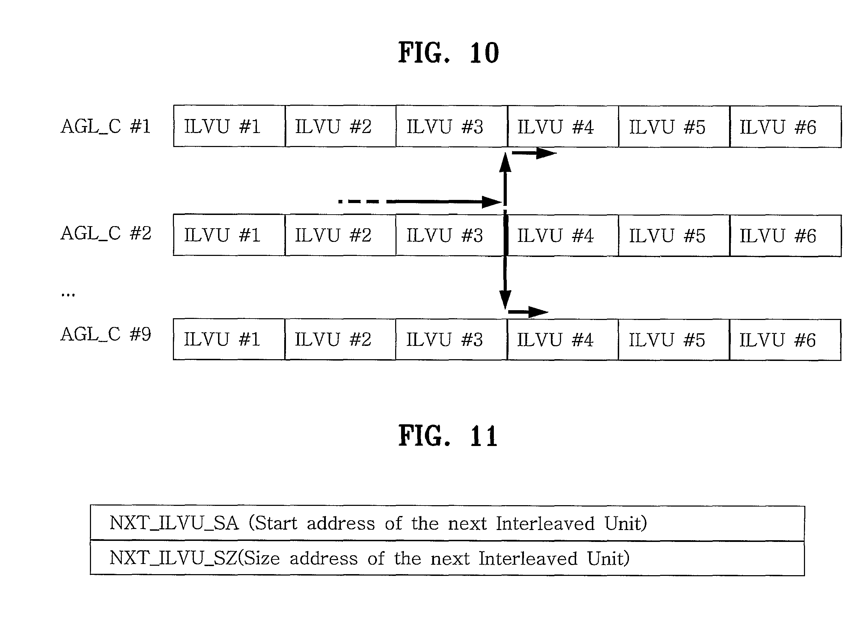

More particularly, FIG. 9 is a diagram of a conventional data structure of two angle data sequentially and alternately recorded using the interleaving method. Referring to FIG. 9, respective ILVUs have the same reproduction time. The amount of data to be recorded may vary according to the type of a compression method used. In the case of interleaved data, in order to reproduce data for an angle or reproduce data for a changed angle, a jump must be made to desired ILVUs. For instance, in order to reproduce data in a first angle, the data for the first angle in the ILVU must be detected. For such first angle data detection, a video object bit stream contains ILVU position data (i.e., NXT_ILVU_SA and NXT_ILVU_SZ in a data structure as shown in FIG. 11). The ILVU position data indicate the position and size of the next ILVU data belonging to a bit stream. After reproduction of the ILVU data, a jump to the next ILVU data is made using the data NXT_ILVU_SA and NXT_ILVU_SZ.

In order to change angles during the data reproduction, a jump must be made to the position of data for the changed angle. The extent of jumping is determined in ILVUs. FIG. 10 is a diagram illustrating jumping to ILVU data for a selected angle in view of cells, according to the conventional multi-angle data reproducing. Referring to FIG. 10, even if a user issues a command to change angles at a certain time during reproduction of ILVU data, the subsequent image data can be reproduced without pause for a seamless change. This is accomplished by first completing the reproduction of ILVU data, following a link by jumping to ILVU data for the changed angle, and reproducing the ILVU data for the changed angle. Information regarding the position of ILVU data is multiplexed and contained in a bit stream of video object data that is recorded using the interleaving method.

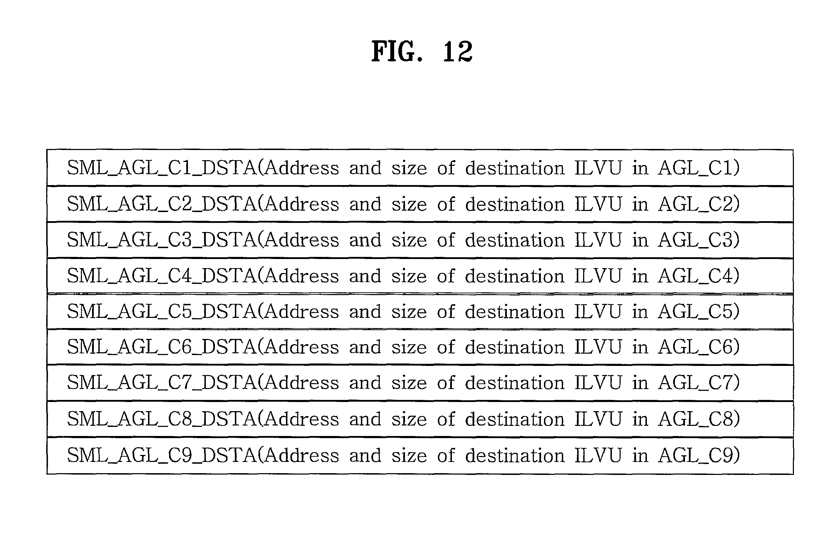

FIG. 12 is a diagram of a conventional data structure of ILVU angle position information SML_AGL_Cn_DSTA contained in a video object bit stream specifying the positions and sizes of ILVU data for nine angles (n is a natural number between 1 and 9). Typically, a maximum number of angles supported by a DVD are nine. The ILVU angle position data SML_AGL_Cn_DSTA provides information regarding the ILVU data for angle #n through a link in a current ILVU data. After the reproduction of the current ILVU data, it is possible to change a current angle to a desired angle and reproduce data for the desired angle, using the ILVU angle position data SML_AGL_Cn_DSTA.

In a DVD authoring process for multi-angle data support, images photographed at different angles are compressed to form several bit streams of data with the same reproduction length. Next, a bit stream is formed using the interleaving method and information is inserted into each bit stream, which allows a reference to other angles during data reproduction. Accordingly, video object data is recorded on a DVD such that angles can be changed during data reproduction.

However, if multi-angle data is divided into predetermined units and stored in a DVD using the interleaving method, the multi-angle data is not continuously recorded in contiguous areas of the DVD. Thus, for continuous reproduction of data for an angle, conventionally a reproducing apparatus is required to move the optical pickup position many times to read the data. In particular, if a reproducing apparatus reproduces data from an optical disc or a hard disc, considerable time is spent by the apparatus to change the optical pickup position. There is also a bit rate limit imposed on a compressed bit stream to compensate for the time delay offset caused when the apparatus changes the optical pickup position.

Disclosure of the Invention

The present invention provides an information storage medium with a data structure in which random access can be performed regardless of the position of multi-angle data, and an apparatus therefor.

Additional aspects and/or advantages of the invention will be set forth in part in the description which follows and, in part, will be obvious from the description, or may be learned by practice of the invention.

The present invention provides an information storage medium on which video object data for multi-angle is recorded, the medium comprising at least one clip that is a unit of a record in terms of which video object data for each angle is recorded, wherein at least one clip for a certain angle is recorded in contiguous areas of the information storage medium.

According to an aspect of the invention, the video object data for each angle comprises a plurality of jumping points that are access points for enabling video object data for different angles to be continuously reproduced, and additional information that contains information regarding the jumping points.

According to an aspect of the invention, the video object data contains clip information that is additional information regarding the clip, and the clip information contains information regarding the jumping points.

According to an aspect of the invention, the additional information regarding each jumping point covers information regarding a starting point to each jumping point of the clip and is stored in a table format in the clip information.

According to an aspect of the invention, the clip information contains information regarding entry points that can be randomly accessed, and the information regarding the jumping points is added to the entry point information and specifies whether each entry point can act as a jumping point.

According to an aspect of the invention, the additional information regarding the jumping points is commonly and additionally recorded on the clips of the video object data for the respective angles, and the information regarding the positions of the respective jumping points of the respective clips is sequentially contained in the common jumping point information.

According to an aspect of the invention, the positions of the jumping points and a distance between adjacent jumping points are determined such that clips are contiguously reproduced without pause when changing a position of reproduction at a jumping point for a change of angles during reproduction of a clip for a certain angle.

According to an aspect of the invention, information regarding PlayItems and PlayLists are recorded as information regarding units of reproduction, and information regarding a plurality of PlayItems, which form an angle block, is recorded as information regarding the PlayItems for a plurality of angles, the PlayItems corresponding to the respective clips, and each PlayList having a plurality of PlayItems.

According to an aspect of the invention, information regarding PlayItems and PlayLists are recorded as information regarding units of reproduction, and the information regarding respective PlayLists are recorded to correspond to the respective angles, the respective PlayItems corresponding to the respective clips and each PlayList having a plurality of PlayItems.

According to an aspect of the invention, additional information regarding a certain angle is added to each PlayList, the respective PlayLists being the information for different angles and recorded to correspond to the respective angles.

According to an aspect of the invention, the clip information contains information regarding entry points that can be randomly accessed, and the jumping point information is the entry point information since all entry points are jumping points.

According to an aspect of the invention, a section of the clip where jumping to entry points is not allowed right after reproduction of the clip or jumping to an entry point, is determined and a length of the section where the jumping is not allowed is determined within a range that an underflow of a buffer is not caused.

According to an aspect of the invention, the clip information contains information regarding the section where jumping is not allowed right after data reproduction or jumping.

The present invention may also be achieved by a reproducing apparatus that reproduces data recorded on an information storage medium in which a plurality of video object data are recorded in units of clips that are units of a record, the clips are separately recorded in contiguous areas, and the respective clips containing information regarding the video object data corresponding to respective angles are recorded when the video object data is multi-angle video object data, the apparatus comprising, a detector that detects the related clips, and reads and reproduces the detected related clips in contiguous areas of the information storage medium when reproducing the multi-angle video object data.

According to an aspect of the invention, the video object data for the respective angles have a plurality of jumping points for enabling video object data for different angles to be continuously reproduced, additional information regarding the jumping points is recorded on the information storage medium, the jumping points indicating positions of the clips divided by same reproduction time, the apparatus reading and reproducing a clip for an angle in the contiguous areas of the information storage medium by reproducing the clip to a certain jumping point and reproducing another clip for a changed angle from a jumping point corresponding to the certain jumping point when change of angles is required during the clip reproduction, to reproduce multi-angle video object data.

According to an aspect of the invention, the respective video object data further contains clip information that provides additional information regarding the clips that are the record units, and the clip information is the additional information regarding the jumping points, the apparatus detecting the additional information regarding jumping points from the clip information regarding related clips,

According to an aspect of the invention, the additional information regarding the jumping points covers information from a starting point to each jumping point in the clip and is stored in a table format in the clip information, the apparatus estimates that the jumping points of the clips for the multi-angle data, the additional jumping point information of the clip recorded at pre-determined locations in the table, are connected to one another, detects the connected jumping points of a clip, which is being reproduced and of a clip for a changed angle, and reproduces these clips at the detected jumping points, respectively, when changing angles during reproduction of the clip.

According to an aspect of the invention, the clip information contains information regarding entry points that can be randomly accessed, and the information regarding the jumping points is added to the entry point information to specify whether a related entry point acts as a jumping point, the apparatus estimates that the jumping points of the clips for the multi-angle data, the jumping point information recorded at the same position as the entry point information, are connected to one another, detects the connected jumping points, and reproduces clips at the detected jumping points when angles are changed.

According to an aspect of the invention, the additional information regarding the jumping points is commonly contained in the video object data in units of the plurality of clips for angles, and the information regarding the position of the jumping points of each clip is sequentially contained in a table format in the common jumping point information, the apparatus reads the common jumping point information regarding clips for a multi-angle data reproduction, detects connected jumping points based upon the common jumping point information, and reproduces clips at the detected jumping points when angles are changed.

According to an aspect of the invention, the positions of the respective jumping points and a distance between adjacent jumping points are determined such that the clips are contiguously reproduced without pause when changing angles during reproduction of a clip for a certain angle, the apparatus reproduces even when a user inputs an angle change signal by completing reproduction of the clip to the jumping point closest to the position of reproduction and reproduces a clip for a changed angle from the jumping point corresponding to the previous jumping point.

According to an aspect of the invention, information regarding PlayItems and PlayLists is recorded as information regarding units of reproduction, and information regarding a plurality of PlayItems, which form an angle block, is recorded as information regarding PlayItems for a plurality of angles, each PlayItem indicates the clip or a portion thereof, the respective PlayItems corresponding to the respective clips and each PlayList having a plurality of PlayItems, the apparatus reproduces one of the plurality of PlayItems which form the angle block to reproduce the plurality of PlayItems of the angle block, and reproduces another PlayItem from the angle block when change of angles is required.

According to an aspect of the invention, information regarding PlayItems and PlayLists is recorded as information regarding units of reproduction, each PlayItem indicates the clip or a portion thereof, and the respective PlayLists are recorded to correspond to the respective angles, the respective PlayItems corresponding to the respective clips, and the respective PlayLists have a plurality of PlayItems, the apparatus reproduces a PlayList corresponding to a desired angle.

According to an aspect of the invention, each PlayList further contains information regarding a corresponding angle, the apparatus reproduces a PlayList corresponding to a related angle.

The present invention may also be achieved by a recording apparatus that records multi-angle video object data on an information storage medium in which random access can be performed, the apparatus comprising a recorder recording respective video object data for respective angles in units of clips in contiguous areas of the information storage medium by dividing the video object data in units of clips, and recording the clips in the information storage medium without using an interleaving method.

According to an aspect of the invention, the apparatus creates a plurality of jumping points and information regarding the plurality of jumping points, in addition to the video object data for the respective angles, on the information storage medium, the jumping points enabling video object data for different angles to be continuously reproduced.

According to an aspect of the invention, the apparatus creates clip information for the clips in addition to the video object data, the clips being units of a data record and the clip information containing the information regarding the jumping points.

According to an aspect of the invention, the jumping point information covers information regarding a starting point to each jumping point of each clip, and the jumping point information is contained in a table format in the clip information.

According to an aspect of the invention, the apparatus records the clip information to contain entry point information regarding points that can be randomly accessed and adds the jumping point information to the entry point information to indicate whether respective entry points act as jumping points.

According to an aspect of the invention, the apparatus commonly records clips for a multi-angle data to contain the jumping point information, the common jumping point information sequentially containing information regarding the position of the jumping points of each clip in a table format.

According to an aspect of the invention, the apparatus determines and records the positions of the jumping points and the distance between adjacent jumping points, such that the clips are continuously reproduced when changing the position of reproduction at a jumping point for the change of angles during reproduction of a clip for a certain angle.

According to an aspect of the invention, the apparatus records information regarding PlayItems and PlayLists as information regarding units of reproduction, and records information regarding a plurality of PlayItems, which form an angle block, as information regarding a plurality of angles, the respective PlayItems corresponding to the respective clips, and each PlayList having a plurality of PlayItems.

According to an aspect of the invention, the apparatus records information regarding PlayItems and PlayLists as information regarding units of reproduction, and records the respective PlayItems to correspond to the respective clips, the respective PlayItems corresponding to the respective clips and the respective PlayLists having a plurality of PlayItems.

According to an aspect of the invention, the apparatus adds additional information regarding a certain angle to the respective PlayLists that are recorded to correspond to the respective angles.

Brief Description of the Drawings

The above and/or other aspects and advantages of the present invention will become more apparent and more readily appreciated from the following description of the embodiments taken in conjunction with the attached drawings in which:

FIG. 1 illustrates a conventional data structure of a DVD;
FIG. 2 illustrates a conventional data structure of a VMG area;
FIG. 3 illustrates a conventional data structure of a VTS area;
FIG. 4 illustrates an example of a title linked to a PGC as an entry PGC, according to the conventional multi-angle data recording;
FIG. 5 illustrates an example of a title including a plurality of linked PGCs, according to the multi-angle data recording;
FIG. 6 illustrates a conventional data structure of a PGC, according to the conventional multi-angle data recording and reproducing;
FIG. 7 illustrates a conventional data structure of an angle block;
FIG. 8 illustrates a conventional data structure of VOBs and cells that are units of a record when multi-angle viewing is applied;
FIG. 9 illustrates angle data that is alternately recorded using a conventional interleaving method;
FIG. 10 illustrates jumping to data for a selected angle in view of cells, according to the conventional multi-angle data reproducing;
FIG. 11 illustrates a conventional data structure of information contained in a video object bit stream having interleaved units (ILVU) data for angle #1;
FIG. 12 illustrates a conventional data structure of information contained in a video object bit stream for a plurality of angles;
FIG. 13 is a diagram of a relationship among a PlayList, a PlayItem, clip information, and a clip, according to an embodiment of the present invention;
FIG. 14 is a diagram of a relationship between jumping units and jumping points in an audio/video (AV) stream clip, according to an embodiment of the present invention;
FIG. 15 is a diagram illustrating a plurality of linked angle data clips for multi-angle data reproduction of the clips, according to an embodiment of the present invention;
FIG. 16 is a diagram of a relationship between angle data clip jumping and a buffer which enables multi-angle video object data to be reproduced without pause, according to an embodiment of the present invention;
FIG. 17 is a diagram of a data structure of a PlayList with a multi-angle structure, according to an embodiment of the present invention;
FIG. 18 is a diagram of a data structure of jumping points, according to a first embodiment of the present invention;
FIG. 19 is a diagram of a data structure of jumping points, according to a second embodiment of the present invention;
FIG. 20 is a diagram of a data structure of jumping points, according to a third embodiment of the present invention;
FIG. 21 is a diagram of an example PlayList with PlayItems that form an angle block, according to an embodiment of the present invention;
FIG. 22 is a diagram of example PlayLists for different angles, according to an embodiment of the present invention;
FIG. 23 is a diagram of an example PlayList with PlayItems that do not form an angle block, according to an embodiment of the present invention; and
FIGS. 24 through 26 are diagrams illustrating a structure of an information storage medium storing multi-angle data and reproduction from the information storage medium, according to another embodiment of the present invention.

Best mode for carrying out the Invention

Reference will now be made in detail to the embodiments of the present invention, examples of which are illustrated in the accompanying drawings, wherein like reference numerals refer to the like elements throughout. The embodiments are described below to explain the present invention by referring to the figures.

According to the present invention, multi-angle support is enabled such that angle data is recorded on an information storage medium using a separation recording method, not an interleaving method. In other words, multi-angle support is realized by recording bit streams for the respective angle data in contiguous recording areas of an information storage medium. During data reproduction, angle change is accomplished by dividing data for each angle into jumping units (JPUs), designating a start address of the JPUs as a jumping point, and recording information regarding the jumping points of the respective angle data as additional jumping point information. According to an aspect of the invention, if respective entry points are respective jumping points, it is possible to detect jumping points, based on information regarding the entry points.

For better understanding of the present invention, main elements of the present invention are enumerated as follows:

(a) compressed and coded audio/video (AV) streams with respect to respective angles;

(b) clip information files containing information, e.g., attribute information, regarding a coded audio/video (AV) stream;

(c) PlayItems as reproduction information that indicate reproduction time for a reproduction section between times IN_time and OUT_time of a clip comprising the above elements (a) and (b);

(d) a PlayList as reproduction information including at least one of the PlayItems; and

(e) a jumping point map in which positions of the jumping points are recorded in a table format.

In the present invention, multi-angle data is referred to as multi-angle object (e.g., AV, video, audio, other data) data comprising a plurality of reproduction units corresponding to a certain reproduction time. That is, multi-angle data comprises data obtained (e.g., data photographed by cameras in case of video) by several receiving/data collecting devices at different angles. Typically, audio data is created to be the same angle data at different angles, but can be differently created at different angles. In conclusion, typically, multiple video object data that can be reproduced in the same time zone is called multi-angle data, and multiple content (e.g., audio, other data) that can be reproduced in the same time zone is called multi-angle content, although, herein, for simplicity, all types of multiple data that can be reproduced in the same time zone is referred to as multi-angle data.

Using multi-angle AV data as an example of multi-angle data in describing the present invention, typically, size of video object data is massive and thus stored or transmitted as compressed bit streams. The present invention uses a clip, which is a unit of a record (i.e., a data unit), and a PlayList and a PlayItem, which are units of reproduction. The clip corresponds to a video title set VOB cell, which is a unit of a record in a conventional DVD as shown in FIGS. 3 and 6, and the PlayList and PlayItem correspond respectively to a PGCI program and a PGCI cell as shown in FIG. 6, which are units of reproduction in a DVD.

More particularly, according to the present invention, an AV stream is recorded in units of clips in contiguous areas of an information storage medium. Typically, the AV stream is also compressed and recorded to reduce the size of the AV stream. When reproducing a recorded clip, characteristics of the clip recorded in each clip, are used to interpret the compressed video object data. The clip characteristics or clip information contains the audio and video attributes of each clip, and an entry point map with information regarding the position of entry points that can be randomly accessed. In the case of the motion picture expert groups (MPEG) video compression technique, an entry point is positioned at an I picture that is intra coded. The entry point map is mainly used during a time search of detecting the position of data at a predetermined time after data reproduction.

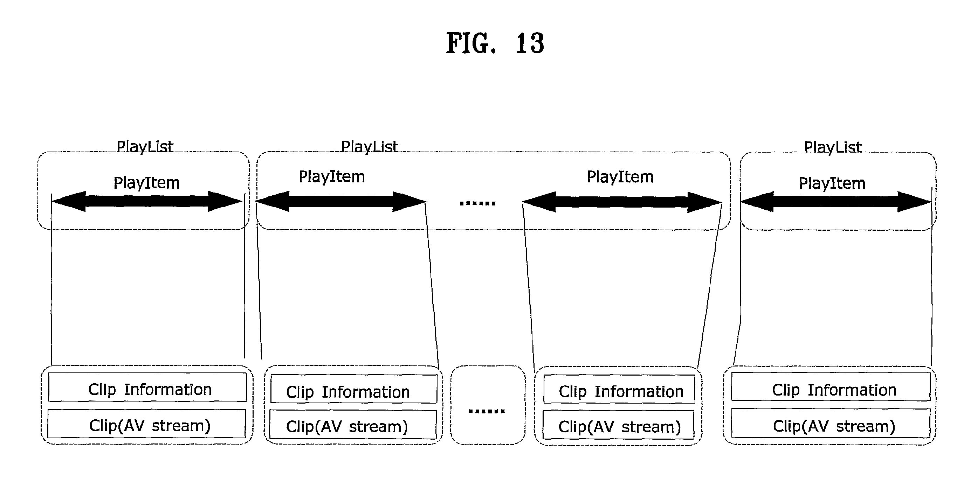

FIG. 13 illustrates the relationship among a PlayList, a PlayItem, clip information, and a clip, according to an embodiment of the invention. Referring to FIG. 13, the PlayList is a basic unit of reproduction. In an information storage medium according to the present invention, a plurality of PlayLists are stored. A PlayList comprises one or a plurality of PlayItems. A PlayItem links to a portion of a clip, and more particularly, indicates starting and finishing times of reproduction in a clip. Thus, clip information is used to easily detect a desired portion of a clip. Hereinafter, a data structure and recording positions of multi-angle data will be described with reference to the accompanying drawings.

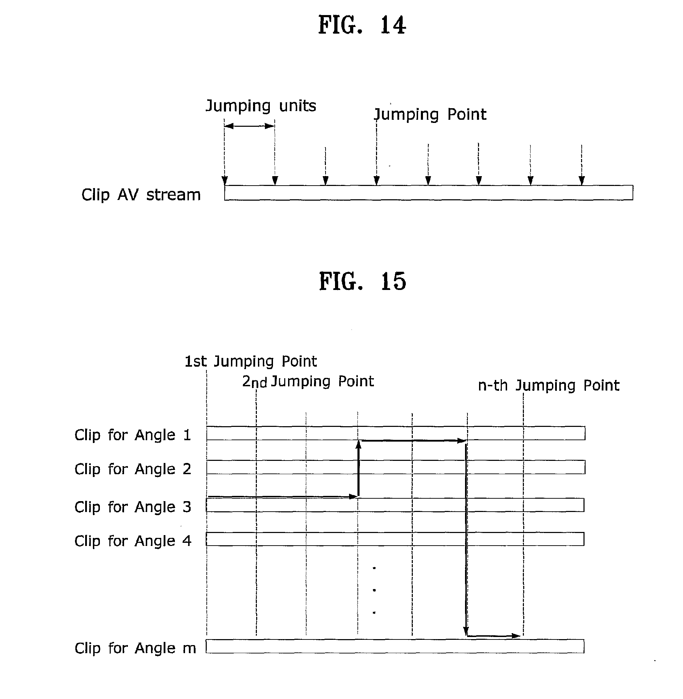

FIG. 14 is a diagram of a relationship between a jumping unit and a jumping point in a clip AV stream, according to an embodiment of the present invention. Referring to FIG. 14, if a clip represents video object data at a specific angle and a part of the multi-angle data, the clip is divided into a plurality of jumping units and the starting point of each jumping unit is called a jumping point. Each jumping point denotes a point in a certain clip for another angle, the point being a starting or destination point when jumping in from or out to a clip for a different angle during reproduction of the certain clip, respectively. Therefore, a clip jumping point links the clips to another angle data. According to an aspect of the invention, a jumping point is an entry point. However, for seamless data reproduction, typically, all entry points are not always set as jumping points, because an entry point is formed at intervals of about 0.5 seconds.

FIG. 15 is a diagram illustrating a plurality of linked angle data clips for multi-angle data reproduction of the clips, according to an embodiment of the present invention. As shown in FIG. 15, assuming that a plurality of clips with an equivalent number of jumping points are linked to one another, the respective clips are recorded in different areas and are linked to one another through jumping points at the same reproduction time. In order to reproduce a different clip (a different angle data clip) during reproduction of a clip, after the reproduction of the clip to a predetermined jumping point is complete and a jumping unit of the different clip is detected, which corresponds to the predetermined jumping unit, the different clip is reproduced from the corresponding jumping unit, thereby enabling seamless, continuous reproduction of the clips. In FIG. 15, for example, arrows denote a process in which the clip for a third angle is first partially reproduced, a first angle is selected during the reproduction of the clip for the third angle, a clip for the first angle is reproduced, an m$^{th}$ angle is selected during the reproduction of the clip for the first angle, and a clip for the m$^{th}$ angle is reproduced. When a user inputs a command to change angles, the changing is performed in units of jumping units.

According to an aspect of the present invention, it is possible to continuously reproduce data from an information storage medium while changing the position of a reproducing apparatus within a predetermined time, even when the data is recorded in non-continuous different areas of the information storage medium in which random access can be carried out. In the present invention, the changing of the position of the reproducing apparatus is described as jumping. In general, additional time is not required for jumping in a volatile electronic information storage medium, such as memory. However, in the case of a non-volatile information storage medium, such as an optical disc where data is read by moving an optical pickup, additional time is required for jumping. Also, when the speed of reading video object data from an information storage medium is different from the speed of reproducing the read video object data, the information storage medium requires an apparatus that can compensate for the difference between the reading and the reproducing speeds, even if data is recorded for reading and reproduction in contiguous areas. According to the present invention, a video object buffer is used as the apparatus allowing continuous reproduction of the multi-angle data from the information storage medium while changing the position of the reproducing apparatus within a predetermined time, even when the multi-angle data is recorded in non-continuous different areas of the information storage medium in which random access can be carried out, as well as providing compensation for the difference in the reading and reproducing speeds. Data read from an information storage medium at a predetermined speed is stored in a video object buffer and then the data is reproduced from the buffer. During the data reading, controlling the speed of the data reading is important in order to prevent overflow or underflow of the video object buffer. The use of the video object buffer enables seamless reproduction of the data even if video object data is recorded at a variable bit rate (VBR).

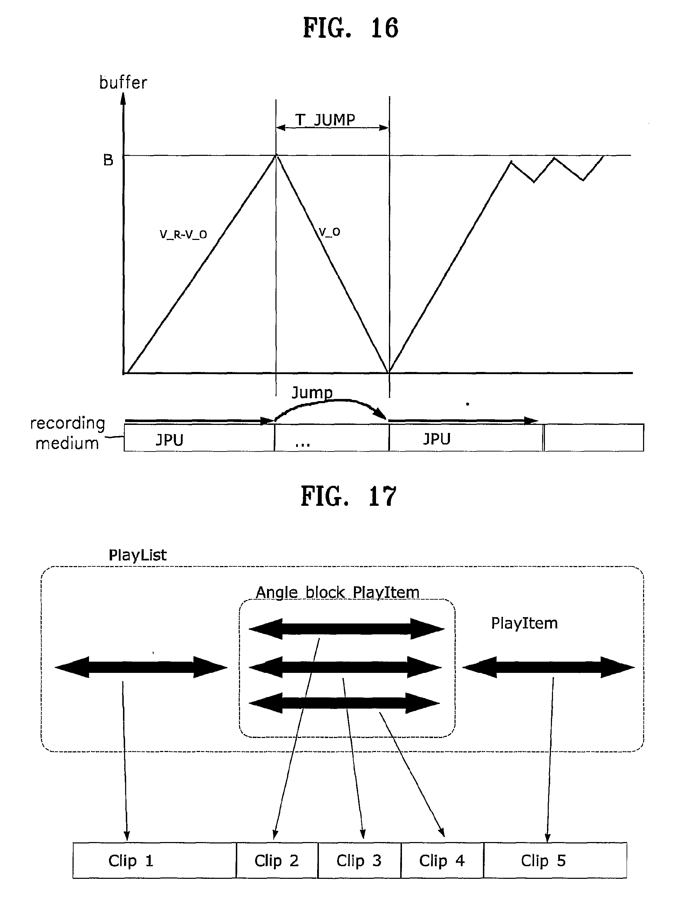

FIG. 16 is a diagram of a relationship between angle data clip jumping and a buffer enabling multi-angle video reproduction without a pause, according to an embodiment of the present invention. As shown in FIG. 16, the size of each jumping unit (JPU) is determined within a range that allows the video object data stored in the video object buffer to be reproduced seamlessly when jumping to a clip of video object data for a different angle, and reproduction of the next jumping unit for the different angle starts prior to the occurrence of buffer underflow. As shown in FIG. 14, a JPU is obtained by dividing the angle data clip. In the case of a reproducing apparatus that requires additional time for jumping to a jumping point for a different angle, the size of the jumping unit is determined by the following condition, assuming that the longest jump time is T_JUMP, the speed of reading data is V_R, and the speed of reproducing video object data is V_O:

$$\text{Jumping Unit Size} > V\_R * V\_O * T\_JUMP / (V\_R - V\_O) \ldots (1)$$

Also, typically, the size of a video object buffer meets the following:

$$\text{Buffer Size (B)} > V\_O * T\_JUMP \quad \ldots (2)$$

FIG. 17 is a diagram of a data structure of a PlayList with a multi-angle structure, according to an embodiment of the present invention. The PlayList of FIG. 17 includes a plurality of PlayItems with a sequential structure and an angle block PlayItem with a multi-angle structure. The angle block PlayItem comprises a plurality of PlayItems corresponding to a plurality of respective angle data clips. In the case of the angle block PlayItem, only one PlayItem thereof is reproduced when reproducing the PlayList. Also, during the reproduction of the angle block PlayItem, angle change is possible by selecting the PlayItem of the changed angle from the angle block PlayItem, and reproducing the selected PlayItem. In general, PlayItems, which constitute an angle block, have the same length of reproduction time. More particularly, in FIG. 17, clips 2 through 4 designated by the respective PlayItems of the angle block PlayItem are not interleaved but are recorded in contiguous areas. In other words, clips 2 through 4 are respectively recorded in the recording areas, in the same manner as the clips designated by the PlayItems not belonging to the angle block PlayItem (i.e., clips 1 and 5). However, clips 2 through 4 include the jumping point information.

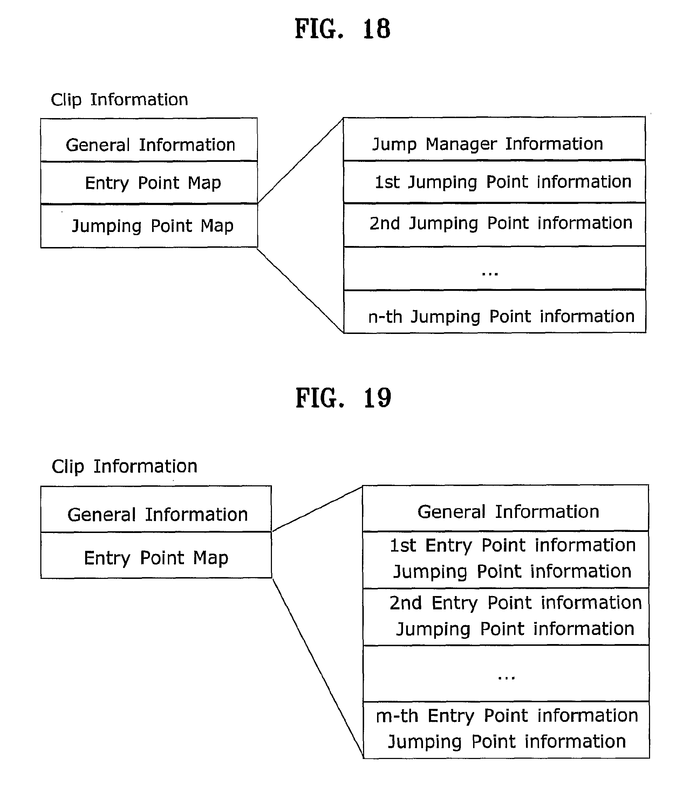

Hereinafter, three types of jumping point data structures in clip information will be described with reference to the accompanying drawings. FIG. 18 is a diagram of a data structure of jumping points in a clip for an angle, according to a first embodiment of the present invention. Referring to FIG. 18, clip information further includes a jumping point map, in addition to the general information and entry point map of the PGC or the MPEG standard. Jump point information contained in the jumping point map is closely related to video object data. Therefore, the jumping point information is included in clip information data and provides additional information regarding the clip.

In FIG. 18, the general information of the clip information contains the following information:

- version_number: version of a clip information file

- EPMap_start_address: starting address of the entry point map, indicated by a byte number from the leading byte of the clip information file.

- JPMap_start_address: starting address of the jumping point map, which is indicated by a byte number from the leading byte of the clip information file. If the value of JPMap_start_address is 0, it means that the clip related to the clip information file is not for angle data and the clip does not contain information regarding the jumping point map.

- ClipInfo: attributes of an AV stream file related to the clip information file

In FIG. 18, the entry point map of the clip information contains information regarding the time and position of an entry point that can be randomly accessed. The jumping point map of the clip information contains information regarding jumping points through which an angle data clip can be virtually connected to clips of different angles. According to an aspect of the present invention, jump manager information included in the jumping point map indicates the number of jumping points, and the number of jumping point information entries follow the jump manager information. The jumping point information is used to detect the positions of the respective jumping points and the starting positions in the related angle data clips. According to an aspect of the invention, the jumping point information is expressed with bytes or the number of sectors. Also, if the video object data is coded as an MPEG transport stream, according to an aspect of the invention, the respective jumping point information is expressed with the number of MPEG-TS packets.

FIG. 19 is a diagram of a data structure of jumping points in a clip for an angle, according to a second embodiment of the present invention. The data structure of the jumping points of FIG. 19 illustrates an entry point map containing jumping point information. Therefore, the data structure of FIG. 19 is advantageous in that it does not require any additional space to store the jumping point information. As mentioned above, when video object data is coded using time-space compression, such as MPEG, a jumping point should be set to an entry point which is a random access entry point. By incorporating information into the entry point map as to whether an entry point acts as a jumping point, the jumping information is easily recorded.

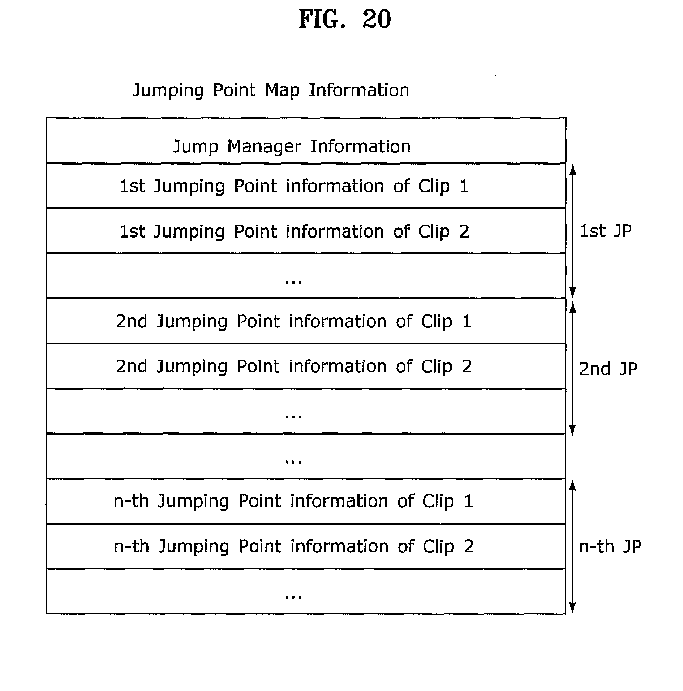

FIG. 20 is a diagram of a data structure of jumping points in a clip for an angle, according to a third embodiment of the present invention. In FIG. 20, includes the jumping point information of clips that form an angle block (see, FIG. 17). The jumping point map information structure is a separate data structure from the clip information structure. The jumping point map information includes jump manager information that indicates the number of clips forming the angle block and the number of jumping points present in a clip, and jumping point information for the respective clips that sequentially follows the jump manager information. The jumping point map information structure enables the position of a desired angle to be easily detected.

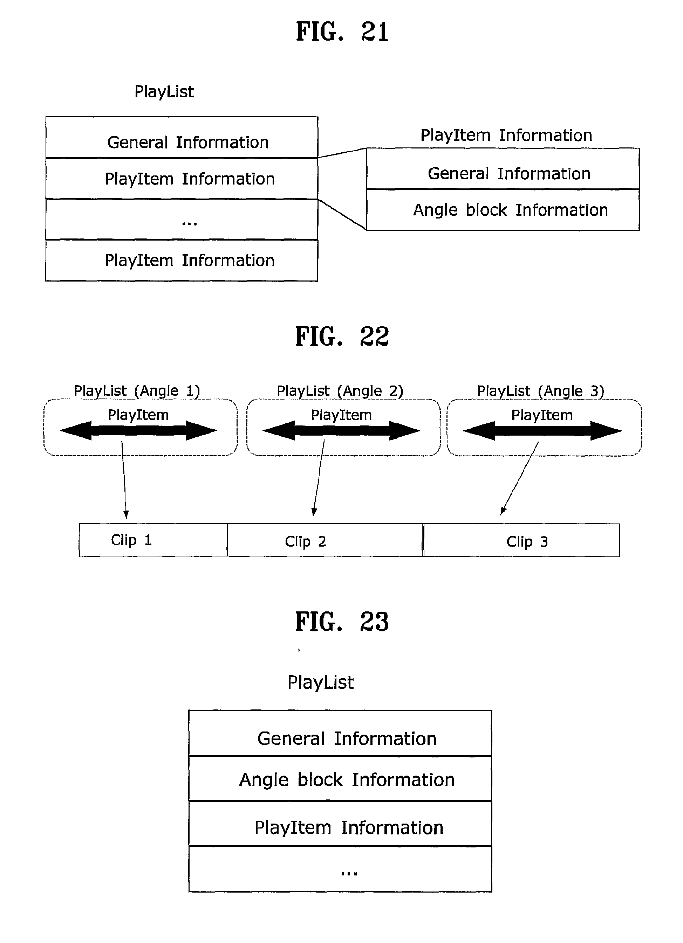

FIG. 21 is a diagram of an example PlayList with PlayItems that form an angle block, according to an embodiment of the present invention. Referring to FIG. 21, each PlayItem information contains general PlayItem information and angle block information. The angle block information basically specifies whether the PlayItem forms an angle block PlayItem. Typically, the PlayItems forming an angle block are sequentially recorded. During reproduction of the PlayList, at least one selected PlayItem from the PlayItems forming an angle block, is reproduced. During reproduction of a PlayItem in the angle block PlayItem, another PlayItem forming the angle block may be reproduced.

FIG. 22 is a diagram of example PlayLists, which are units of reproduction, for different angles. Referring to FIG. 22, the respective PlayLists include a single PlayItem or PlayItems for a single angle, which do not form an angle block. That is, each PlayList corresponds to an angle. FIG. 23 is a diagram of an example PlayList with PlayItems that do not form an angle block (i.e., the PlayList includes a single PlayItem), according to an embodiment of the present invention. As shown in FIG. 23, each PlayList contains angle block information regarding an angle, which in this case indicates that the PlayItem information do not form an angle block. When a user selects an angle or changes angles, a related/corresponding angle PlayList is reproduced.

According to the present invention, units of a data record constituting multi-angle data are recorded in contiguous areas of an information storage medium. Jumping points inserted in the record units interface to the record units of different angles, and information regarding the jumping points is stored as additional information (i.e., the clip characteristics or the clip information). Next, information regarding units of reproduction corresponding to the units of record is stored as multi-angle information (i.e., the PlayLists and the PlayItems).

A reproducing apparatus according to the present invention reproduces multi-angle data and has the following advantages:

First, when an angle data is being reproduces and if the angle is changed, multi-angle data can be read from contiguous areas of an information storage medium and the data read can be reproduced continuously. That is, multi-angle data is coded using the same method for coding non multi-angle data. Therefore, contrary to the interleaving method, additional data and coding operations are not required to continuously reproduce data for an angle.

Secondly, a clip, which is a unit of record, contains jumping point information that enables connection to video object data for another angle. To change angles at an instant when reproducing video object data for a current angle, the reproducing apparatus reproduces the video object data for the current angle to a next jumping point and then reproduces video object data for a changed angle from a jumping point corresponding to the next jumping point.

Thirdly, when multi-angle information is recorded in a plurality of PlayItems, i.e., units of reproduction that form an angle block and belong to a PlayList (see FIGS. 17 and 21), in order to change angles during reproduction of one PlayItem of the angle block, the reproducing apparatus reproduces PlayItem to a jumping point closest to a current reproducing position of a clip and then reproduces a clip for the changed angle from the jumping point. If a single PlayList is recorded for each angle as shown in FIG. 22, when a user wants to change angles during reproduction of a PlayList, a PlayList for a changed angle is detected and reproduced.

A recording apparatus according to the present invention records multi-angle data as clips and includes clip information regarding jumping points, and records units of reproduction linked to the data records on an information storage medium. A recording apparatus according to an embodiment of the present invention determines the sizes of jumping units, which are divided portion of a clip, based on a reading speed $V\_R$ of a reproducing apparatus, a jumping time $T\_JUMP$, and the highest bit rate $V\_O$ of video object data (see Equations (1) and (2)). Next, the determined sizes of jumping units are converted into reproduction time. Next, the video object data is coded such that random access (entry) points are set to be larger than or the same as the reproduction time. Here, typically, the interfaces to the video object data are jumping points. In general, a random access point is the starting point of a group of pictures (GOPs) in time-space compression coding, such as MPEG, and in case of MPEG, the jumping points are set to the entry points. Thus, with MPEG, each jumping unit comprises a plurality of GOPs. Also, typically, jumping points are formed in the same reproduction time zone of each video object data.

For the respective angles, the coded video object data is recorded in contiguous areas of an information storage medium. Information regarding the locations of the jumping points is recorded as additional information. According to an aspect of the present invention, information regarding jumping points of each clip may be recorded as clip information, thereby providing clip characteristics.

Next, information regarding units of reproduction, which form multi-angle data, is created and recorded. For instance, a PlayList including PlayItems corresponding to respective clips of multiple angles is made by linking the PlayItems to one another (i.e., angle block PlayItem). Otherwise, a single PlayList may correspond to a single angle.

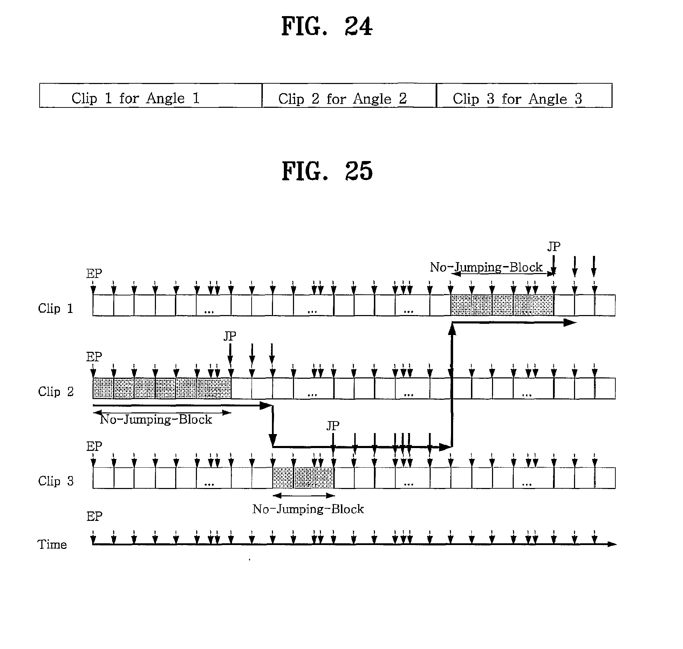

FIGS. 24 through 26 are diagrams illustrating structure of an information storage medium storing multi-angle data and reproduction from the information storage medium, according to another embodiment of the present invention. According to an aspect of the invention, the information storage medium has a data structure in which video object data for a multi-angle is recorded in units of clips and all entry points formed in the clips are set as jumping points.

When a user wants to change angles during reproduction of a clip for an angle, a reproducing apparatus according to the present invention reproduces the clip to an entry point of the clip closest to a current reproduction position, jumps to the entry point of a clip for the changed angle, which correspond to the entry point of the reproduced clip, and reproduces the clip for the changed angle after the entry point of the clip for the changed angle. Here, typically, all entry points for all angles are formed in clips in the same time zone. In other words, as shown in FIG. 24, respective video angle object data, which are physically recorded in contiguous but different areas, are logically linked to one another through respective entry points.

In general, as shown in FIG. 25, entry points EPs are units of record having reproduction time between 0.5 second and 1 second and also formed at positions where random access can be performed. When multi-angle video object data is compressed using MPEG, the video object data comprises a plurality of GOPs. In order to use the entry points of the video object data comprising the plurality of GOPs as jumping points during angle changing, all images in the GOPs are required to be formed of a closed GOP that are encoded only using images in a related GOP.

In a recording medium data structure in which all the entry points are jumping points, additional information regarding jumping points is not required. However, in such a data structure, underflow of a reproducing buffer is likely to be caused when the reproducing apparatus jumps to an entry point in order to change angles. Therefore, according to an aspect of the invention, to prevent the reproducing apparatus from jumping to an entry point in a certain section of an information storage medium during or right after jumping, no jumping sections are provided as shown in FIG. 25. Sections where jumping is not allowed is called a no-jumping block (NJB).

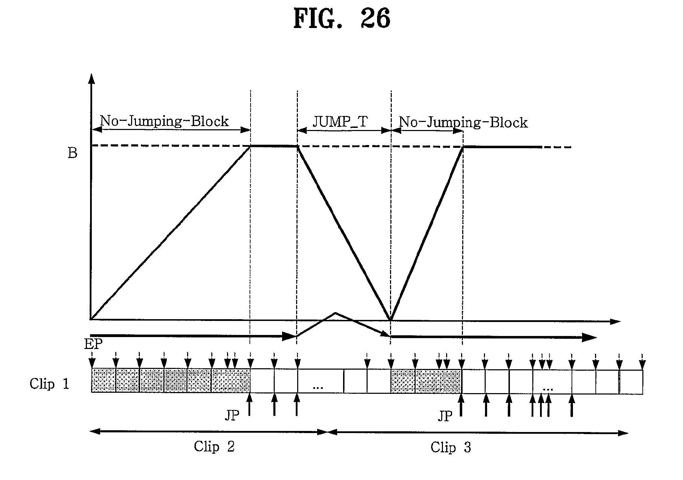

Referring to FIG. 26, a change of angles is not allowed when the amount of data contained in a buffer right after data reproduction or the jumping of a reproducing apparatus is less than the amount B of data. Here, the amount B of data is the lowest limit of data amount that allows seamless reproduction of images for a jumping time JUMP_ T. When the reproduction of images is continuous while exceeding the length of an NJB, the amount of data in the buffer is always more than the amount B of data and jumping is allowed at all entry points.

The length of an NJB can be calculated using the same method of calculating the length of a JPU. More specifically, assuming that the longest jump time is T_JUMP, a speed of reading data is V_R, and a speed of reproducing video object data is V_O, the length of an NJB is calculated as follows:

$$\text{NJB Length} > V\_R * V\_O * T\_JUMP / (V\_R - V\_O) \ldots (3)$$

Also, typically, the size of a buffer is determined to meet the following:

$$\text{Buffer Size (B)} > V\_O * T\_JUMP \ldots (4)$$

Industrial Applicability

As described above, according to the present invention, video object data for multi-angle data is divided into predetermined units (i.e., clips and jumping units thereof) and recorded in contiguous areas of an information storage medium without using the interleaving method. More particularly, if a "clip" of the present invention corresponds to the prior art VOB as a data record unit, in the present invention, in case of multi-angle data, the "clip" is recorded in contiguous areas on the storage medium. In contrast to the present invention, in the prior art, in case of multi-angle data, cells of the VOB are recorded according to the interleave method or, for example, on alternate areas in the storage medium in case of two angles as shown in FIG. 9. Accordingly, in the present invention, the layout of a data area for multi-angle data is easy to control and manage by an optical recording and reproducing apparatus, and random access is easy to perform, thereby efficiently recording/reading multi-angle data (i.e., fewer optical pickup position movements than the conventional multi-angle data recording/reading) and extending the conventional bit rate limit imposed on a compressed bit stream.

The above described multi-angle data recording and reproducing processes of the present invention as embodied in a multi-angle data recorder/reproduces are implemented using software and/or computing hardware. For example, the processes of the invention can be embodied in a detector and a reproducer of a multi-angle data reproducer, and a processor programmed to record received/input multi-angle data, from any source type, on an information storage medium according to the multi-angle data structure of the invention. More particularly, an information storage medium controls a multi-angle data reproducing apparatus by having a data structure including at least one clip object for each angle, each clip being a data record unit of the multi-angle data for an angle. Each angle clip is divided into predetermined jumping units at jumping points and each is recorded in contiguous areas of the information storage medium. Using the clip jumping points as a link among the contiguously recorded angle clips provides efficient random access for reading the multi-angle data for angle change. Therefore, the present invention provides an information storage medium recording apparatus, comprising a programmed computer processor dividing data of multiple angles into respective predetermined angle units (each angle unit comprising at least two or more data cells) designated with jumping points used to link the predetermined angle units of the multi-angle data and recording each predetermined angle unit including the jumping points in contiguous areas of the information storage medium.

Although a few embodiments of the present invention have been shown and described, it would be appreciated by those skilled in the art that changes may be made in these embodiments without departing from the principles and spirit of the invention, the scope of which is defined in the claims and their equivalents.

**Claims**

1. A method for reproducing motion picture data for different angles corresponding to a motion picture from an information storage medium, the method comprising:

   reading clip AV streams corresponding to the motion picture data for different angles, the clip AV streams being interleaved with respect to each other, from the information storage medium; and
   reproducing the clip AV streams according to clip information corresponding to the clip AV streams, wherein each clip information comprises an entry point map comprising information on entry points of a corresponding one of the clip AV streams for random access, and information on whether each of the entry points is an angle change point, wherein the angle change point is a point through which the motion picture is reproduced from one angle to another angle.

2. The method according to claim 1, wherein the information on entry points comprises location information of the entry point among the AV stream.

# FIG. 1

| Volume and File Structure | DVD-Video Zone | | | | |
|---|---|---|---|---|---|

| | VMG | VTS #1 | VTS #2 | ... | VTS #n |
|---|---|---|---|---|---|

| | File | ... | File | ... | File | ... | File | ... | File | ... |
|---|---|---|---|---|---|---|---|---|---|---|
| | 2~3 | | 3~12 | | | | | | | |

# FIG. 2

| VMG |
|---|

| VMGI | VOBS for Menu | VMGI backup |
|---|---|---|
| 1 file | 1 file | 1· file |

# FIG. 3

| | | | |
|---|---|---|---|
| 1 file | 1 file | 1~9 file | 1 file |
| VTSI | VOBS for Menu | VOBS for Title | VTSI backup |

VTS #n

Cell ID

| C_IDN #1 | C_IDN #2 | C_IDN #1 | ... | ... | C_IDN #1 | .. |
|---|---|---|---|---|---|---|

VOB ID

| VOB_IDN #1 | VOB_IDN #2 | ... | VOB_IDN #n |
|---|---|---|---|

# FIG. 4

Entry PGC

# FIG. 5

Entry PGC

PGC #2 ...
...

PGC #3 ...

PGC #4

# FIG. 6

PGC

**PGCI**

| Pre-Command | Program #1 | | Program #n | Post-Command |

Program #1: Cell #1 [cc] ... Cell #2 [cc]

... Program #n: Cell #1 [cc] ...

[cc]: Cell Command

**VOBS**

VOB_IDN #1: C_IDN #1  C_IDN #2  ...

VOB_IDN #2: C_IDN #1  ...  ...

VOB_IDN #s: C_IDN #1  ...

EP 2 009 640 A2

**FIG. 7**

Cell #m

Cell #i

Angle Block

| Cell #i+1 |
| Cell #i+2 |
| Cell #i+3 |
| ... |
| Cell #i+k |

Cell #i+k+1

Cell #n

## FIG. 8

Contiguous Block | Contiguous Block

VOB i | VOB j

Cell 1 | Cell 2

Cell 1 | Cell 2 | Cell 3

## FIG. 9

Interleaved Block

Interleaved Unit (ILVU)

VOB k

VOB l

Cell 1 | Cell 2

Cell 1 | Cell 2

EP 2 009 640 A2

# FIG. 10

| AGL_C #1 | ILVU #1 | ILVU #2 | ILVU #3 | ILVU #4 | ILVU #5 | ILVU #6 |
|---|---|---|---|---|---|---|

| AGL_C #2 | ILVU #1 | ILVU #2 | ILVU #3 | ILVU #4 | ILVU #5 | ILVU #6 |
|---|---|---|---|---|---|---|

...

| AGL_C #9 | ILVU #1 | ILVU #2 | ILVU #3 | ILVU #4 | ILVU #5 | ILVU #6 |
|---|---|---|---|---|---|---|

# FIG. 11

| NXT_ILVU_SA (Start address of the next Interleaved Unit) |
|---|
| NXT_ILVU_SZ(Size address of the next Interleaved Unit) |

EP 2 009 640 A2

## FIG. 12

| |
|---|
| SML_AGL_C1_DSTA(Address and size of destination ILVU in AGL_C1) |
| SML_AGL_C2_DSTA(Address and size of destination ILVU in AGL_C2) |
| SML_AGL_C3_DSTA(Address and size of destination ILVU in AGL_C3) |
| SML_AGL_C4_DSTA(Address and size of destination ILVU in AGL_C4) |
| SML_AGL_C5_DSTA(Address and size of destination ILVU in AGL_C5) |
| SML_AGL_C6_DSTA(Address and size of destination ILVU in AGL_C6) |
| SML_AGL_C7_DSTA(Address and size of destination ILVU in AGL_C7) |
| SML_AGL_C8_DSTA(Address and size of destination ILVU in AGL_C8) |
| SML_AGL_C9_DSTA(Address and size of destination ILVU in AGL_C9) |

EP 2 009 640 A2

## FIG. 13

# FIG. 14

Jumping units

Jumping Point

Clip AV stream

# FIG. 15

1st Jumping Point

2nd Jumping Point

n-th Jumping Point

Clip for Angle 1

Clip for Angle 2

Clip for Angle 3

Clip for Angle 4

Clip for Angle m

# FIG. 16

buffer

T_JUMP

B

V_R-V_O

V_O

Jump

recording
medium

| JPU | ... | JPU | |
|-----|-----|-----|---|

# FIG. 17

PlayList

Angle block PlayItem

PlayItem

| Clip 1 | Clip 2 | Clip 3 | Clip 4 | Clip 5 |
|--------|--------|--------|--------|--------|

# FIG. 18

Clip Information

| General Information |
|---|
| Entry Point Map |
| Jumping Point Map |

| Jump Manager Information |
|---|
| 1st Jumping Point information |
| 2nd Jumping Point information |
| ... |
| n-th Jumping Point information |

# FIG. 19

Clip Information

| General Information |
|---|
| Entry Point Map |

| General Information |
|---|
| 1st Entry Point information<br>Jumping Point information |
| 2nd Entry Point information<br>Jumping Point information |
| ... |
| m-th Entry Point information<br>Jumping Point information |

# FIG. 20

Jumping Point Map Information

| |
|---|
| Jump Manager Information |
| 1st Jumping Point information of Clip 1 |
| 1st Jumping Point information of Clip 2 |
| ... |
| 2nd Jumping Point information of Clip 1 |
| 2nd Jumping Point information of Clip 2 |
| ... |
| ... |
| n-th Jumping Point information of Clip 1 |
| n-th Jumping Point information of Clip 2 |
| ... |

1st JP

2nd JP

n-th JP

# FIG. 21

PlayList

| General Information |
| --- |
| PlayItem Information |
| ... |
| PlayItem Information |

PlayItem Information

| General Information |
| --- |
| Angle block Information |

# FIG. 22

PlayList (Angle 1)
PlayItem
⬅➡

PlayList (Angle 2)
PlayItem
⬅➡

PlayList (Angle 3)
PlayItem
⬅➡

| Clip 1 | Clip 2 | Clip 3 |
| --- | --- | --- |

# FIG. 23

PlayList

| General Information |
| --- |
| Angle block Information |
| PlayItem Information |
| ... |

# FIG. 24

| Clip 1 for Angle 1 | Clip 2 for Angle 2 | Clip 3 for Angle 3 |

# FIG. 25

# FIG. 26



EP 2 009 640 A2

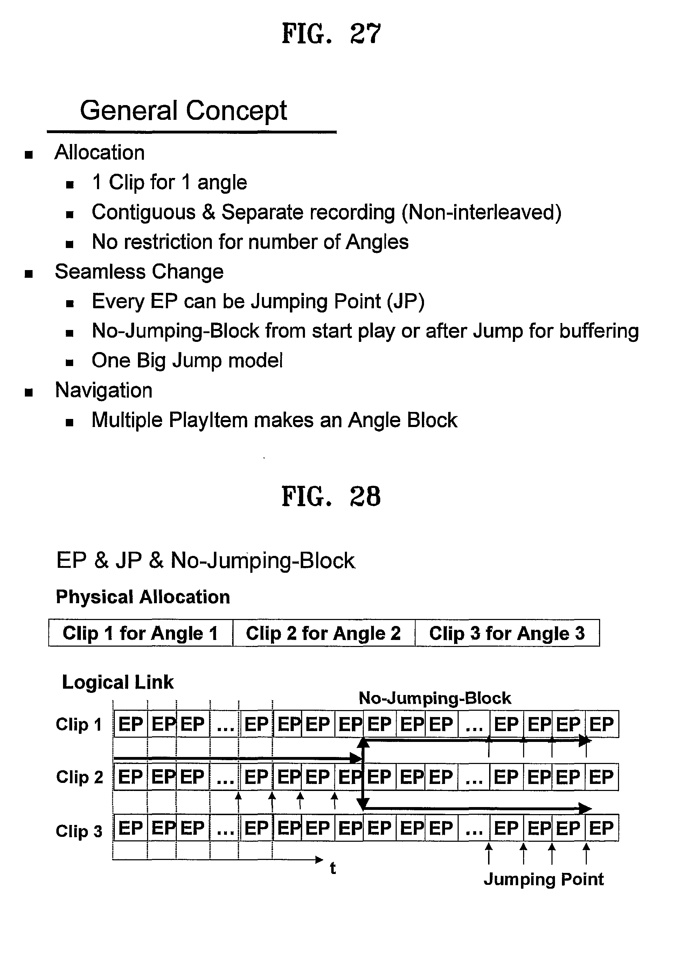

# FIG. 27

## General Concept

- Allocation
  - 1 Clip for 1 angle
  - Contiguous & Separate recording (Non-interleaved)
  - No restriction for number of Angles
- Seamless Change
  - Every EP can be Jumping Point (JP)
  - No-Jumping-Block from start play or after Jump for buffering
  - One Big Jump model
- Navigation
  - Multiple PlayItem makes an Angle Block

# FIG. 28

## EP & JP & No-Jumping-Block

**Physical Allocation**

| Clip 1 for Angle 1 | Clip 2 for Angle 2 | Clip 3 for Angle 3 |
|---|---|---|

**Logical Link**

No-Jumping-Block

Clip 1 | EP | EP | EP | ... | EP | EP | EP | EP | EP | EP | EP | ... | EP | EP | EP | EP

Clip 2 | EP | EP | EP | ... | EP | EP | EP | EP | EP | EP | EP | ... | EP | EP | EP | EP

Clip 3 | EP | EP | EP | ... | EP | EP | EP | EP | EP | EP | EP | ... | EP | EP | EP | EP

t

Jumping Point

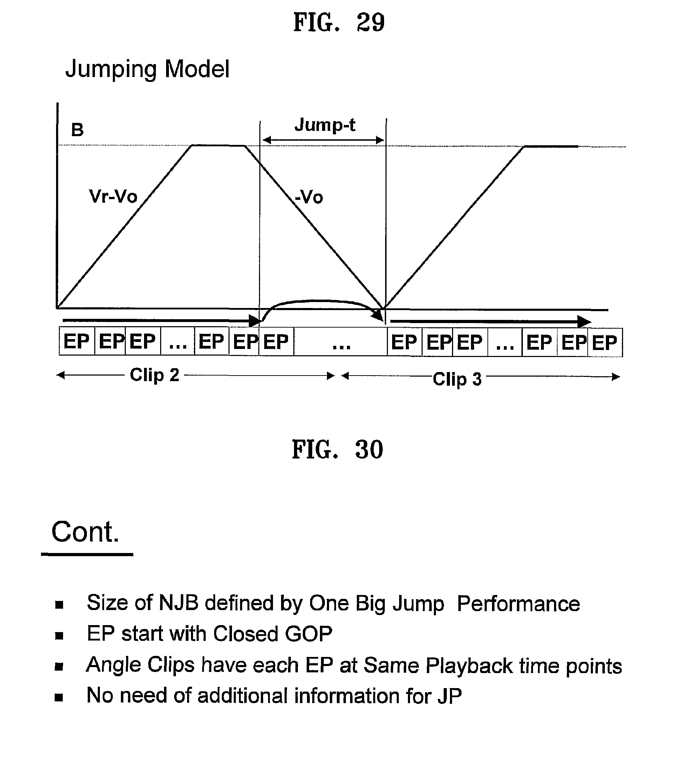

# FIG. 29

## Jumping Model

# FIG. 30

## Cont.

- Size of NJB defined by One Big Jump Performance
- EP start with Closed GOP
- Angle Clips have each EP at Same Playback time points
- No need of additional information for JP

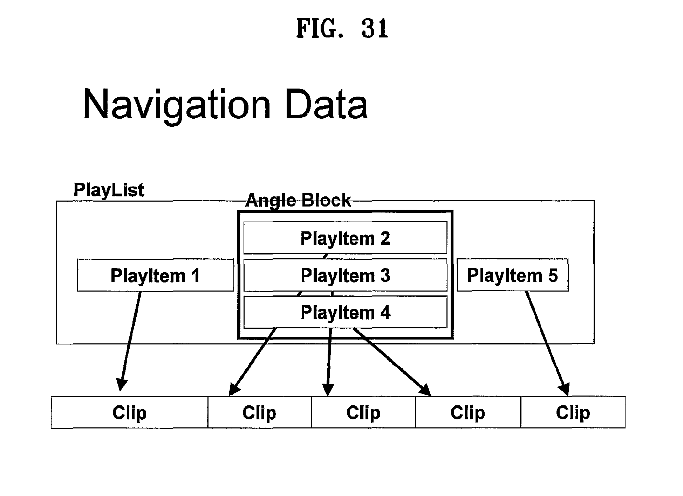

# FIG. 31

# Navigation Data

**PlayList**      Angle Block

| PlayItem 2 |
|:----------:|

| PlayItem 1 | PlayItem 3 | PlayItem 5 |
|:----------:|:----------:|:----------:|

| PlayItem 4 |
|:----------:|

| Clip | Clip | Clip | Clip | Clip |
|:----:|:----:|:----:|:----:|:----:|